(19) Europäisches Patentamt
European Patent Office
Office européen des brevets

(11) **EP 3 719 902 B1**

(12) **EUROPEAN PATENT SPECIFICATION**

(45) Date of publication and mention
of the grant of the patent:
**26.07.2023  Bulletin 2023/30**

(21) Application number: **18883589.6**

(22) Date of filing: **08.05.2018**

(51) International Patent Classification (IPC):
*H01M 8/04276* (2016.01)     *H01M 8/24* (2016.01)
*H01M 8/2455* (2016.01)     *H01M 8/18* (2006.01)
*H01M 8/04746* (2016.01)

(52) Cooperative Patent Classification (CPC):
**H01M 8/04276; H01M 8/188; H01M 8/2455;**
**Y02E 60/50**

(86) International application number:
**PCT/KR2018/005243**

(87) International publication number:
**WO 2019/107676 (06.06.2019 Gazette 2019/23)**

(54) **METHOD OF OPERATING A REDOX FLOW BATTERY**

VERFAHREN ZUM BETRIEB EINER REDOX-FLOW-BATTERIE

PROCÉDÉ POUR FAIRE FONCTIONNER UNE BATTERIE À FLUX REDOX

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **29.11.2017   KR 20170161869**

(43) Date of publication of application:
**07.10.2020  Bulletin 2020/41**

(73) Proprietor: **Standard Energy Inc.**
**Yuseong-gu, Daejeon 34014 (KR)**

(72) Inventors:
• **KIM, Bugi**
**Daejeon 34029 (KR)**
• **KIM, Kihyun**
**Daejeon 34029 (KR)**
• **PARK, Sang Hyun**
**Daejeon 34029 (KR)**
• **CHOI, Damdam**
**Daejeon 34029 (KR)**
• **CHO, Bumhee**
**Daejeon 34029 (KR)**
• **CHOE, Kang Yeong**
**Daejeon 34029 (KR)**

(74) Representative: **SJW Patentanwälte**
**Goethestraße 21**
**80336 München (DE)**

(56) References cited:
JP-A- 2009 016 218     KR-A- 20170 020 687
KR-A- 20170 076 514     KR-B1- 101 357 822
KR-B1- 101 742 980     US-A1- 2014 057 141
US-A1- 2014 220 463     US-A1- 2016 111 706
US-A1- 2016 315 337     US-A1- 2016 372 763

**Description**

**Technical Field**

The present invention relates to a method of operating a redox flow battery. More particularly, the present invention relates to a method of operating a redox flow battery including a plurality of battery modules each having an electrolyte tank provided in each battery cell to store a positive electrolyte and a negative electrolyte, and a fluid control unit provided to transfer the electrolyte from the electrolyte tank to the battery cell, thus reducing a reaction time, improving efficiency, and suppressing the occurrence of a shunt current.

**Background Art**

Recently, in order to suppress the emission of greenhouse gas that is a main cause of global warming, renewable energy such as solar energy or wind energy is in the spotlight. A lot of research is being conducted to promote their practical use. However, renewable energy is greatly affected by a location environment or natural conditions. Moreover, renewable energy has a drawback that its output is variable, so that it is impossible to continuously and evenly supply energy. Therefore, in order to use renewable energy for home use or for commercial use, a system is adopted to store energy when output is high and to use stored energy when output is low.

As such an energy storage system, a high-capacity secondary battery is used. For instance, a high-capacity secondary battery storage system is applied to a large-scale photovoltaic system or wind farms. Examples of the secondary battery for storing high-capacity power include a lead storage battery, a sodium sulfide battery, and a redox flow battery.

Since the redox flow battery may be operated at room temperature and may independently design capacity and output, a lot of research into the redox flow battery as the high-capacity secondary battery is being conducted.

The redox flow battery is configured such that a separator (membrane), an electrode, and a separation plate are arranged in series to form a stack, similarly to a fuel cell, thus having the function of the secondary battery that may charge and discharge electric energy. The redox flow battery is operated as follows: while positive and negative electrolytes fed from positive and negative electrolyte storage tanks on both sides of the separator are circulated, ion exchange is performed and electron transfer occurs in this process, so that the battery is charged or discharged. Since such a redox flow battery is longer in lifespan than a conventional secondary battery and may be made to be used for a medium- or large-sized system of kW to MW, the redox flow battery is known to be most suitable for an ESS.

The redox flow battery is configured such that the tanks storing the positive electrolyte and the negative electrolyte are disposed with a separate space (e.g. the electrolyte tanks are disposed with a certain space defined on each of opposite sides of the stack or under the stack). However, the redox flow battery has a drawback that it includes an electrolyte-circulation pipe connecting the stack and each electrolyte tank, so that an entire system adopting the redox flow battery is relatively larger in volume than that adopting another power storage device having a similar power storage capacity, such as a lead storage battery, a lithium ion battery, or a lithium-sulfur battery.

Furthermore, since a plurality of electrolyte circulation pipes should be provided to be connected to the stack, the pump, and the electrolyte tank, a pump capacity above a certain level is required to supply a constant amount of electrolyte to each stack. However, the redox flow battery is problematic in that, as the length of the electrolyte circulation pipe increases, the required capacity of the pump increases, so that the size of the pump and the manufacturing cost of the battery increase. In addition, an increase in pump capacity leads to an increase in power consumption, so that the entire battery efficiency is deteriorated.

Additionally, a common battery should have a quick operational response time in which charging/discharging operations are performed. However, the redox flow battery is problematic in that it takes a time to circulate the electrolyte into the stack by the pump when the charging/discharging operations are performed in a stop state, so that a response time becomes slower due to the time required for circulation, and a plurality of chemical-resistant pipes is needed to connect the cell, the stack, and the pump, thus causing an increase in cost.

Here, the conventional redox flow battery supplies the electrolyte to each battery cell through a manifold. Since the electrolyte filled in the manifold serves as an electric passage connecting respective cells to each other, it may become an electron transfer path. A shunt current is generated through such a path, so that some of the energy is lost by the shunt current during the charging/discharging operation, thus causing a reduction in efficiency, damage to components, and non-uniform performance of the cell. According to the related art, in order to reduce the shunt current, a method of increasing the length of the manifold and reducing a sectional area is mainly adopted. However, this method increases the flow resistance of fluid and causes a pumping loss. Hence, an alternative for overcoming the above-described problems is required.

US2014/220463 A1, US2016/111706 A1, US2016/372763 A1, US2014/057141 A1, and US2016/315337 A1 relate to conventional redox flow battery systems comprising a battery stack, electrolyte tanks, an electrolyte path, and a fluid control unit configured to transmit pressure to the electrolyte path.

**Disclosure**

**Technical Problem**

The present invention has been made to solve the above-mentioned problems and difficulties and relates to a method of operating a redox flow battery configured such that each of battery cells or a stack formed by stacking a plurality of battery cells includes an electrolyte tank storing an electrolyte or a plurality of battery cells shares the electrolyte tank, and a means for replacing a pump is applied so as to transport the electrolyte to the battery cell or the stack, thereby preventing battery efficiency from being deteriorated due to the installation of a plurality of pumps, and suppressing the occurrence of a shunt current.

**Technical Solution**

The present invention is directed to a method of operating a redox flow battery

An aspect of the present invention is directed to a method of operating the redox flow battery, the redox flow battery including one or more battery modules each including a battery cell, electrolyte tanks, an electrolyte path, and at least one fluid control unit configured to transmit externally generated pressure to the electrolyte path, wherein each battery module or a predetermined number of battery modules is/are configured to independently circulate an electrolyte to perform charging/discharging operations, wherein the redox flow battery satisfies the following Equations 1 and 2:

$$[\text{Equation 1}]$$
$$V_h \geq 0.05 V_c,$$

and

$$[\text{Equation 2}]$$
$$0.05(\text{sec}) \leq T \leq V_h/Q_{min},$$

wherein in Equations 1 and 2, $V_h$ is a maximum volume of the electrolyte introduced into the fluid control unit, $Q_{min}$ is a critical flow rate at which a volume of the electrolyte flowing per minute corresponds to 3% of a reaction volume $V_c$, and T is an operating cycle of the fluid control unit.

Each battery module may include one or more battery cells each including a positive electrode and a negative electrode, and a separation plate stacked on an outer surface of a separator; a pair of electrolyte tanks provided in the battery module to supply a positive-electrode electrolyte or a negative-electrode electrolyte to the positive electrode or the negative electrode, respectively; an electrolyte path connecting the battery cell and each of the electrolyte tanks to transfer the electrolyte; and the at least one fluid control unit provided in the electrolyte path and configured to transmit the externally generated pressure from outside the battery module to the electrolyte path, thereby controlling a flow of the electrolyte.

Each of the at least one fluid control unit may include at least one check valve provided in the electrolyte path to induce the flow of the electrolyte in one direction; and a fluid transfer pipe provided adjacent to the check valve to communicate with the electrolyte path, and configured to directly transmit the externally generated pressure from outside the respective battery module to the electrolyte path.

Each of the at least one fluid control unit may include a control-unit housing provided at an end of the electrolyte path, and located in one of the electrolyte tanks; a fluid transfer pipe configured to directly transmit the externally generated pressure from outside the respective battery module to the control-unit housing; and at least one check valve provided on a side of the control-unit housing and configured to induce the electrolyte from each of the electrolyte tanks to the control-unit housing, and to simultaneously induce the electrolyte from the control-unit housing to the electrolyte path.

Each battery module may include two or more fluid control units.

Each battery module may include two fluid control units, and a pressure supply cycle of each of the two fluid control units is configured such that sections of a positive pressure cycle or a negative pressure cycle of any one of the fluid control units are overlapped with those of the other fluid control unit.

Each of the at least one fluid control unit may further include at least one pressure control valve.

The fluid transfer pipe comprises therein at least one of electrolyte inflow preventing component selected from the group consisting of a diaphragm, a cutoff valve, a check valve, or a float valve.

The fluid transfer pipe may further include a fluid filter.

**Advantageous Effects**

A redox flow battery includes a battery module having, therein, battery cells or a stack and an electrolyte tank, and applies a fluid control unit using pressure to each battery module, instead of providing the pump for each module, in order to transport an electrolyte, thereby significantly reducing and eliminating the occurrence of a shunt current.

In addition, when an electrolyte tank is provided for each battery module, a transfer path of an electrolyte can be rapidly reduced, power required for operating a pump can be saved, and battery efficiency can be enhanced.

**Description of Drawings**

FIG. 1 shows a redox flow battery to which a plurality of battery modules is coupled.

FIG. 2 shows an internal structure of a battery module.

FIG. 3 shows an internal structure of another battery module.

FIG. 4 shows an example of a check valve.

FIGS. 5A to 5C each shows another example of a check valve.

FIGS. 6 and 7 show a redox flow battery having two fluid control units.

FIGS. 8A to 8C each shows a pressure cycle of each fluid control unit, in the case of having two fluid control units.

FIGS. 9A and 9B each shows a fluid control unit further including a pressure control valve.

FIGS. 10A and 10B each shows an example of the pressure control valve.

FIGS. 11 and 12 show a fluid control unit further including an electrolyte inflow preventing component and a fluid filter.

FIG. 13 shows a redox flow battery to which a plurality of battery modules is coupled.

FIG. 14A to 14C each shows a flow deviation ratio as the function of $V_h/V_c$ of the redox flow battery, according to embodiment 1 of the present invention and comparative examples 1 and 2.

*Description of reference numerals of important parts*

1: stack
10: battery module
100: battery cell
110: positive electrode
120: negative electrode
130: separator
140: separation plate
150: housing
200: electrolyte tank
210: positive-electrolyte tank
220: negative-electrolyte tank
300: fluid control unit
310: check valve
311: first check valve
312: second check valve
320: control-unit housing
330: fluid transfer pipe
340: pressure control valve
350: electrolyte inflow preventing component
360: fluid filter
400: electrolyte path
500: pressure generator
600: module connector

**Best Mode**

Hereinafter, a method of operating a redox flow battery according to specific embodiments of the present invention will be described in detail. The following specific embodiments are provided as an example in order to fully convey the idea of the present invention to those skilled in the art.

Therefore, the present invention may be embodied in other forms without being limited to the following embodiments. The following embodiments are only described for making the idea of the present invention clear, and the present invention is not limited thereto.

Unless otherwise defined, all terms including technical and scientific terms used herein have the same meaning as commonly understood by one of ordinary skill in the art to which the present invention belongs.

Furthermore, terms "first", "second", "A", "B", "(a)", "(b)", etc. may be used herein to describe various components. These terms are only used to distinguish one component from another component. The nature, order or sequence of components is not limited by these terms. It will be understood that when a component is referred to as being "coupled" or "connected" to another component, it may be directly coupled or connected to the other component or intervening components may be present therebetween.

Furthermore, the following drawings are provided as an example in order to fully convey the idea of the present invention to those skilled in the art. Therefore, the present invention may be embodied in other forms without being limited to the following drawings. The following drawings may be exaggerated for making the idea of the present invention clear. The same reference numerals are used throughout the drawings to designate the same components.

Furthermore, the singular forms used in the specification and claims are intended to include the plural forms as well, unless the context clearly indicates otherwise.

In the present invention, term 'battery cell' is a minimum unit in which charging/discharging operations are performed through an electrolyte, and includes a separator in which ion exchange occurs, a separation plate, etc.

In the present invention, term 'stack' means a component formed by stacking a plurality of battery cells.

Inventors of the present invention continuously conducted research so as to solve physical problems in which an increase in length of an electrolyte circulation pipe that is the drawback of a redox flow battery, and an increase in volume of the battery itself due to the increase in length occur, a high-performance pump is required, or the number of pumps increases, and other problems in which the size of the pump for transporting an electrolyte and the manufacturing cost of the battery increase, response time becomes slower, and pumping loss occurs. Through the research, the inventors completed the invention in which a plurality of battery modules each having a battery cell or a stack and a fluid control unit is coupled to each other, thus significantly reducing an electrolyte moving distance, and simultaneously each battery module includes a fluid controller to replace the pump, and several factors affecting the supply of the electrolyte are controlled, thus solving problems in which the response time becomes slower and the pumping loss occurs.

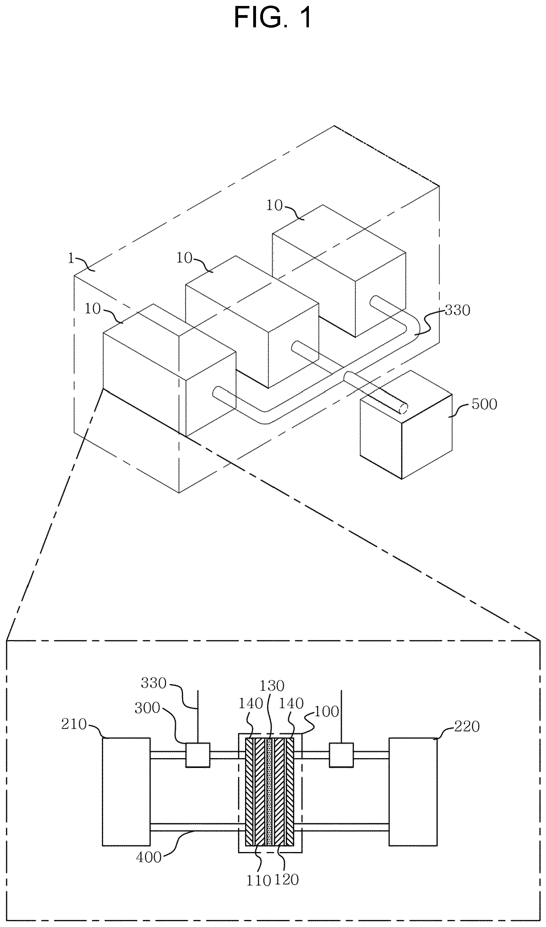

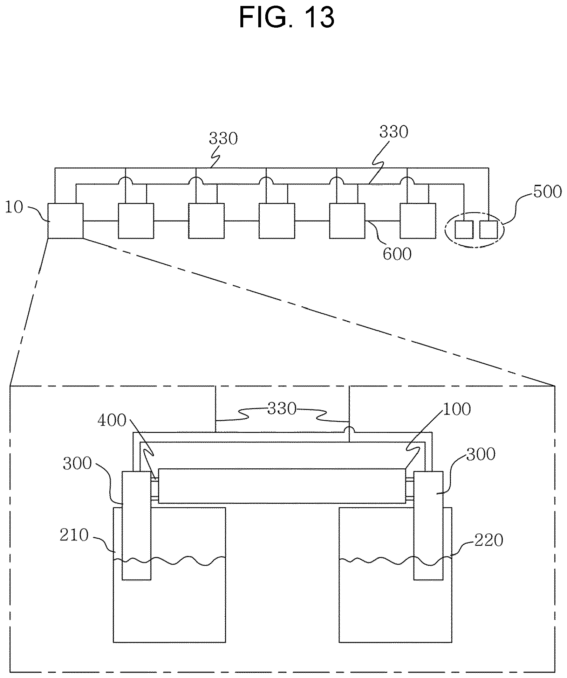

As shown in FIG. 1 or 13, the redox flow battery includes one battery module 10 or two or more battery modules that are electrically connected to each other. The battery module includes therein a battery cell 100, an electrolyte tank 200, an electrolyte path 400, and a fluid control unit 300 that transmits externally generated pressure to an electrolyte path. Each of the battery modules independently circulates the electrolyte therein to perform the charging/discharging operations.

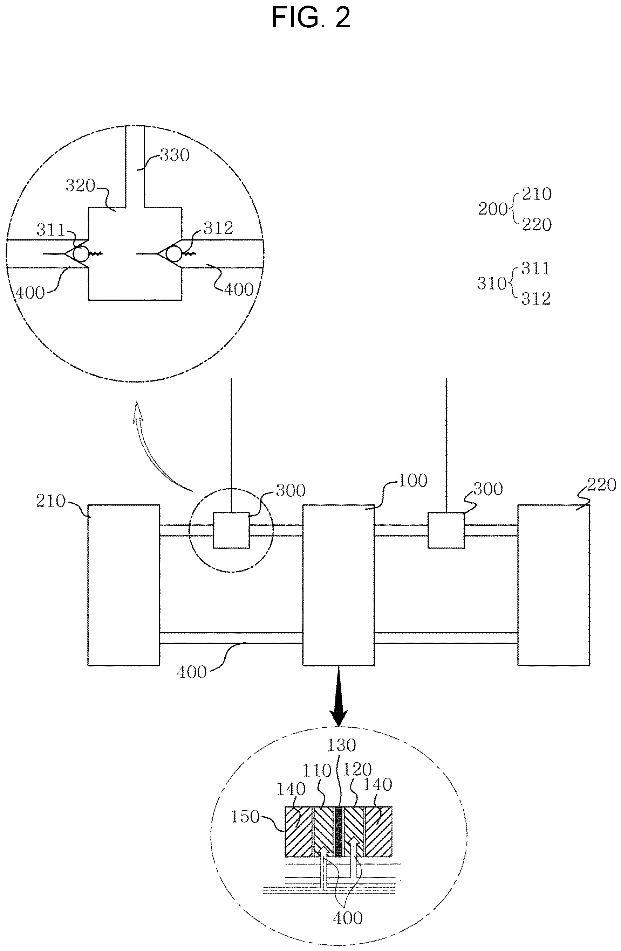

Referring to FIG. 2, the battery module may include one battery cell 100 or two or more battery cells, a pair of electrolyte tanks 200, an electrolyte path 400, and one fluid control unit 300 or two or more fluid control units. The battery cell includes therein a pair of electrodes that are divided into a positive electrode 110 and a negative electrode 120, a separator 130 provided between the electrodes, and a separation plate 140 stacked on an outer surface of each electrode. The electrolyte tanks are provided in the battery module to supply a positive-electrode electrolyte or a negative-electrode electrolyte to the positive electrode or the negative electrode. The electrolyte path connects the battery cell and the electrolyte tank to transfer the electrolyte. The fluid control unit is provided in the electrolyte path to transmit pressure from an outside of the battery module to the electrolyte path, thus controlling the flow of the electrolyte.

Meanwhile, since the configuration and function of an end plate, the electrolyte tank 200, and the pump are well known to those skilled in the art to which the present invention belongs, they will not be separately described herein.

However, the battery cell is described and illustrated with reference to a common redox flow battery. In some cases, the electrode, the separator, the separation plate or the like may be omitted.

Hereinafter, respective components will be described in detail with reference to the drawings.

FIG. 1 schematically shows the configuration of the redox flow battery. As shown in FIG. 13, a plurality of battery modules 10 is electrically connected via a module connector 600. The battery module is connected to a pressure generator 500 via a fluid transfer pipe 330 to transfer the electrolyte. In some cases, the battery modules may be independently operated without being electrically connected to each other.

The redox flow battery is characterized in that all the battery modules independently circulate electrolytes without the interference or exchange of the electrolytes therebetween or some battery modules share an electrolyte tank, thus minimizing the generation of a shunt current. However, in some cases, in order to mix the electrolytes in each battery module or between the battery modules, a passage may be formed to allow the electrolytes to flow between the battery modules. The present invention does not limit such a configuration.

FIG. 2 schematically shows the configuration of the battery module 10. The battery module includes a battery cell 100, a positive-electrolyte tank 210, and a negative-electrolyte tank 220, which are connected to the battery cell via an electrolyte path 400. Meanwhile, a fluid control unit 300 may be provided in the electrolyte path to transfer the electrolyte using externally transmitted pressure.

In the present invention, as shown in the bottom of FIG. 2, the battery cell 100 may include a pair of electrodes that are divided into a positive electrode 110 and a negative electrode 120, a separator 130 located between the electrodes, and separation plates 140 positioned outside the positive electrode and the negative electrode. The positive electrode, the negative electrode, the separator, and the separation plates are located in the housing 150, so that an electrochemical reaction such as electrolyte transfer, charging, or discharging occurs in the housing.

The positive-electrode electrolyte and the negative-electrode electrolyte supplied to the battery cell are transferred from the electrolyte tanks and introduced through the electrolyte path into the housing, so that the reaction is performed. After the reaction is completed, the electrolyte flows again through the electrolyte path to the electrolyte tank and then circulates.

In the present invention, the fluid control unit 300 may be provided in the electrolyte path through which the electrolyte is introduced into the battery cell, so as to replace an existing pump and circulate the electrolyte. The fluid control unit is provided to allow the electrolyte to flow in a given direction using a change in pressure. The structure and type of the fluid control unit are not limited as long as it prevents backflow and may transfer the electrolyte through a change in pressure.

Another example of the fluid control unit may include a check valve. The check valve will be described below in detail with reference to the top of the left side of FIG. 2. A pair of check valves 311 and 312 is provided in the electrolyte path to transfer fluid in one direction. A fluid transfer pipe 330 is provided through the electrolyte path, and directly transmits pressure to the electrolyte path between the check valves.

In other words, if pressure is transmitted from an outside through the fluid transfer pipe, a change in pressure naturally occurs in a space between the first check valve 311 and the second check valve 312, thereby causing the electrolyte to flow in one direction.

For example, if an operation is performed in the fluid transfer pipe so that pressure is lowered (negative pressure) in the space between the first check valve and the second check valve, the pressure of the space between the check valves is also lowered naturally. Therefore, in order to maintain pressure equilibrium, the electrolyte present beyond the first check valve is introduced into the space between the check valves, and the second check valve is closed, thus preventing the backflow of the electrolyte. Furthermore, when the pressure supplied from the outside increases (positive pressure), the electrolyte present between the check valves naturally flows through the second check valve into the battery cell, and the first check valve is closed. By repeating this process, the electrolyte flows into the battery cell or the stack and then circulates.

Although FIG. 2, etc. shows that the fluid control unit is provided with a pair of check valves, the fluid control unit may have only one check valve because the interior of the battery cell has high fluid flow resistance and thus backflow can be partially prevented even if the second check valve is dispensed with as necessary. In contrast, two or more check valves, namely, a plurality of check valves may be further provided. The configuration of the fluid control unit may be freely changed within a range capable of achieving the objective of the present invention. Of course, this also falls within the purview of the present invention.

In the embodiment of the present invention, it is shown that the fluid control unit applies positive pressure to the battery cell to supply the electrolyte. However, without being limited thereto, the fluid control unit may be connected to the electrolyte path through which the electrolyte is discharged from the battery cell, so that the fluid control unit may apply negative pressure to the battery cell to circulate the electrolyte from the battery cell. In this case, the operating direction of the check valve may be reversed.

As the present invention has the above-described structure, it is unnecessary to operate a motor for each battery module, thus enhancing energy efficiency, and a circulation distance of the electrolyte is reduced, thus providing a quick response time of the battery, and minimizing the use of an acid-resistant pipe.

In the present invention, since the fluid control unit should induce the flow of the electrolyte, positive pressure and negative pressure above a certain level should be formed. However, the present invention does not limit the ranges of the positive pressure and the negative pressure. That is, the pressure may be higher or lower than the atmospheric pressure as long as the pressure may induce the flow of the electrolyte. For instance, the ranges of the pressure may be appropriately adjusted regardless of upper and lower limits of the pressure, such as the positive pressure to the negative pressure on the basis of the atmospheric pressure, the positive pressure to the atmospheric pressure, or the atmospheric pressure to the negative pressure.

Furthermore, in order to induce the smooth flow of the electrolyte and to increase an amount of the electrolyte supplied to the battery cell, as shown in the top of FIG. 2, a control-unit housing 320 may be further provided to define a predetermined compartment between the check valves.

The type of a device for transmitting pressure to the fluid control unit and the type of fluid are not limited in the present invention. For instance, in order to generate the positive pressure, a compressor or a pump may be provided as the pressure generator 500 to compress the fluid for transmitting pressure. In order to generate the negative pressure, vacuum equipment, suction equipment, or an ejector equipped with a venturi tube may be provided as the pressure generator. The fluid may use both gas and liquid, and may be freely selected depending on the type of the pressure generator that is operated. Both the positive pressure and the negative pressure may be simultaneously generated through one pressure generator, and only either of equipment generating the positive pressure or equipment generating the negative pressure may be used. Of course, as described above, the working pressure of the fluid control unit may be combinations of positive pressure-negative pressure, positive pressure-atmospheric pressure, and negative pressure-atmospheric pressure. A difference in the flow rate of the electrolyte may occur. However, the operating concept of the fluid control unit remains the same regardless of the combinations of the pressure.

Furthermore, the pressure generator according to the present invention may compensate for fluid that is lost during the operation through a separate supply device (not shown). In order to keep the level of pressure acting on the fluid control unit constant, a pressure measuring device (not shown) may be further provided. When positive pressure and negative pressure below a certain level are measured, a component may be further included to inject the fluid into the pressure generator through the supply device or to discharge the fluid to the outside.

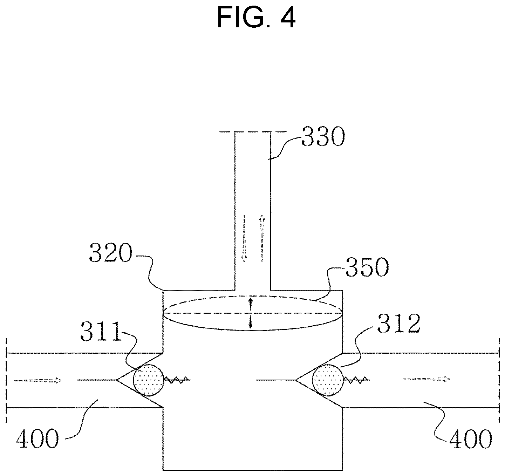

FIG. 4 shows a general configuration of the fluid control unit having the check valve. A pair of check valves 311 and 312 is provided on both sides of the control-unit housing 320 to be directly connected to the electrolyte path 400, and a fluid transfer pipe 330 is directly connected to an upper surface of the control-unit housing to supply pressure to the electrolyte path. Here, in order to prevent the fluid from flowing through the fluid transfer pipe into the control-unit housing, one or more electrolyte inflow preventing component 350 may be further provided.

The electrolyte inflow preventing component may have any material or shape as long as it may smoothly transmit pressure and prevent fluid from flowing into the control-unit housing. For instance, as shown in FIG. 4, the electrolyte inflow preventing component is located in the control-unit housing, and is preferably provided in the form of a flexible valve that may physically isolate the control-unit housing from the fluid transfer pipe. When the electrolyte contains an acid component, the valve with which the electrolyte may be in direct contact preferably uses an acid-resistant valve.

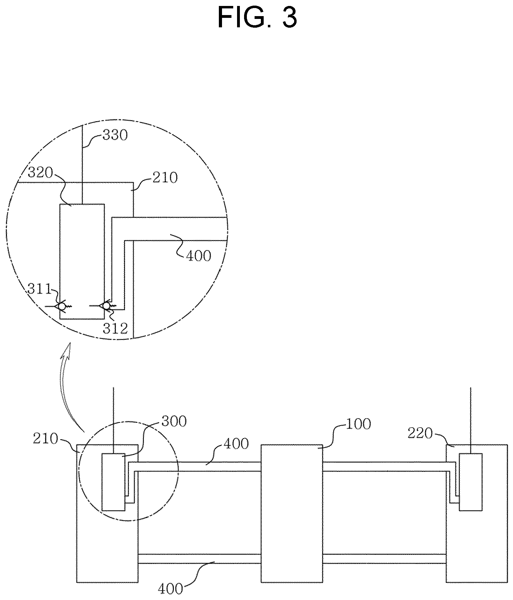

The fluid control unit 300 according to the present invention may be located between the electrolyte tank and the battery cell as shown in FIG. 2, but may be located in the electrolyte tank 200 as shown in FIG. 3. This will be described below in detail. The fluid control unit is provided in the electrolyte tank, is located on an end of the electrolyte path 400, and prevents the fluid and the electrolyte from being mixed with each other through the control-unit housing 320. The control-unit housing has on sides thereof the pair of check valves 311 and 312. The check valves include a check valve operated from an outside to an inside of the control-unit housing, and a check valve operated from the inside to the outside of the control-unit housing. Here, the check valve operated from the inside to the outside of the control-unit housing may be directly connected to an end of the electrolyte path. Furthermore, the check valve operated from the outside to the inside of the control-unit housing is preferably in direct contact with the electrolyte of the electrolyte tank or is located in the electrolyte by extending a pipe.

When the fluid control unit is located in the electrolyte tank, if the positive pressure is transmitted through the pressure generator to the fluid control unit in the electrolyte tank, the electrolyte in the fluid control unit is pushed to the electrolyte path through the check valve, and a level of the electrolyte in the fluid control unit is naturally reduced, so that a level difference between the electrolyte inside the fluid control unit and the electrolyte outside the fluid control unit occurs. If the level of the electrolyte is lowered and the supply of the positive pressure is stopped, the electrolyte may be introduced into the fluid control unit through a level difference of the electrolyte. Therefore, the supply amount of the negative pressure required for introducing the electrolyte in the pressure generator may be reduced, or the electrolyte may be naturally introduced into the fluid control unit even without supplying the negative pressure, thereby enhancing the efficiency of the entire redox flow battery.

In the present invention, the check valve 310 is also called a non return valve, and is operated to induce the flow of the electrolyte in one direction. In the present invention, the check valve may have any structure such as a ball shape or a valve shape as shown in FIG. 2 as long as it may control the flow direction of the fluid.

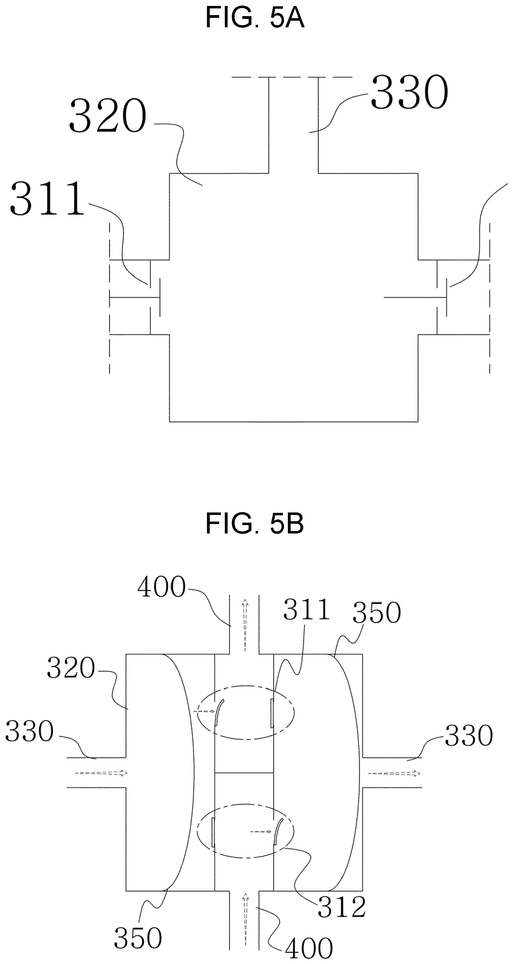

For example, the check valve may have a disc shape as shown in FIG. 5A or a valve shape as shown in FIG. 5B. In addition, various shapes of check valves such as a lift check valve, a swing check valve, a swing type wafer check valve, or a split disc check valve may be used.

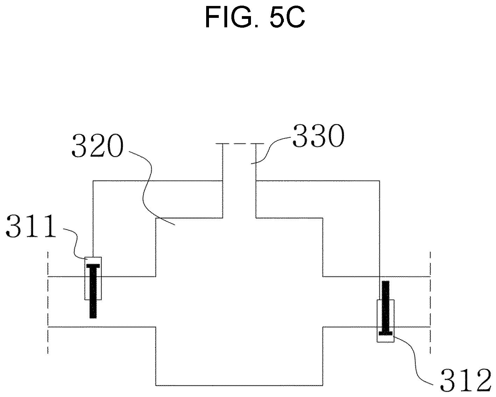

Furthermore, a valve operated under pressure as shown in FIG. 5C may be provided, in addition to the check valve. The operation of the valve is also equal to that of the common check valve. The flow of the electrolyte in a backward direction has higher flow resistance than the flow of the electrolyte in a forward direction, so that the fluid may generally flow in the forward direction. This also falls within the category of the check valve. In other words, the flow of the electrolyte in the backward direction has higher flow resistance than the flow of the electrolyte in the forward direction, regardless of the shape of the check valve, so that the fluid may generally flow in the forward direction. This also falls within the category of the check valve.

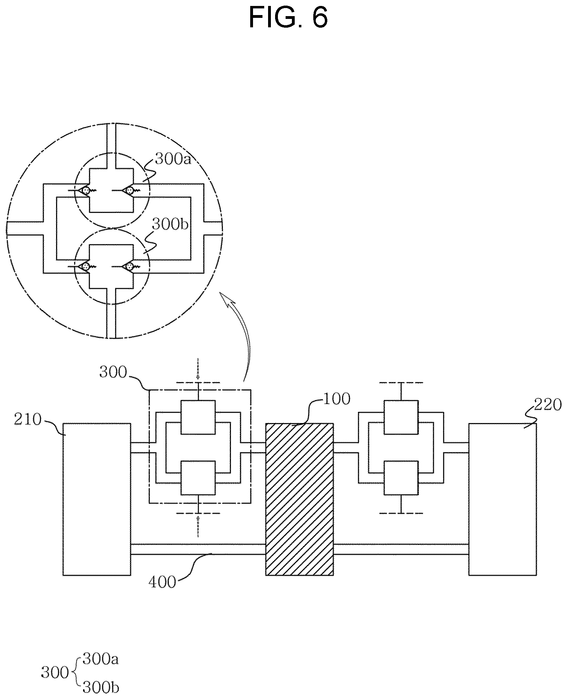

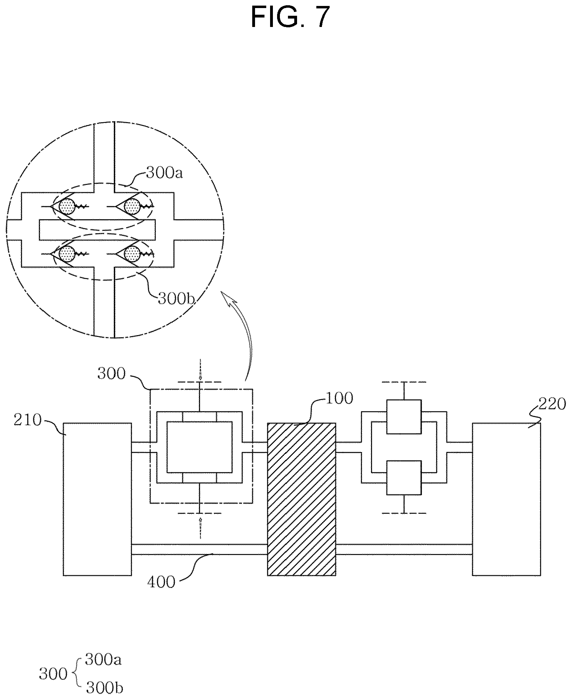

Furthermore, as shown in FIGS. 6 and 7, the battery module may include two or more fluid control units 300. Generally, when the fluid transfer pipe of the fluid control unit is one, the electrolyte is supplied to the battery cell only in the case of the positive pressure, so that it is difficult to make the continuous flow of the electrolyte. Furthermore, in this case, the electrolyte stays in the cell for a predetermined period of time without continuously flowing, so that the performance of the cell itself may be deteriorated.

In order to solve the problem, the present invention may induce a continuous flow by connecting two or more fluid control units. This will be described in detail with reference to FIG. 7. If the positive pressure is supplied to the first fluid control unit 300a, the negative pressure is supplied to the second fluid control unit 300b. That is, since the positive pressure is supplied to the first fluid control unit, the electrolyte located between the check valves is introduced into the battery cell. At the same time, since the negative pressure is supplied to the second fluid control unit, the electrolyte in the electrolyte tank is introduced into the space between the check valves. After the electrolyte in the first fluid control unit is supplied to the battery cell, the negative pressure is supplied to the first fluid control unit. At the same time, the positive pressure is supplied to the second fluid control unit, thus supplying the electrolyte to the battery cell. By repeating these operations, it is possible to induce the continuous flow of the electrolyte, thus allowing the cell to be stably operated.

In the case of having a plurality of fluid control units on the battery module as described above, it is preferable to adjust the supply cycle of the pressure supplied to the fluid control units. In this case, it is preferable that the supply cycle has different phases rather than the same phase, thus changing pressure.

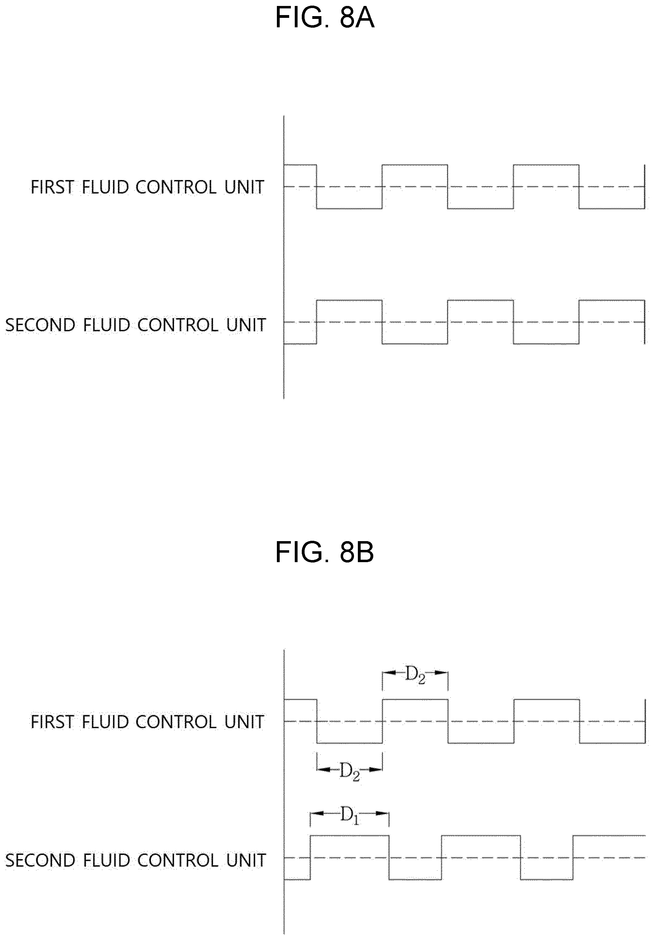

This will be described in detail with reference to FIGS. 8A to 8C. As shown in FIG. 8A, when the pressure supply cycle of the first fluid control unit and the pressure supply cycle of the second fluid control unit are completely opposite to each other but the positive pressure section of each control unit has the same length as the negative pressure section, the electrolyte of a predetermined flow rate should be supplied to the battery cell but an amount of the electrolyte smaller than an amount of the electrolyte that should be generally supplied is supplied to the battery cell due to interference between respective sections at a point when the pressure cycle is changed in each fluid control unit. That is, the flow rate may be momentarily reduced in this section.

Therefore, in order to prevent the supply of the electrolyte from being hindered due to the above-described interference, positive-pressure cycle sections or negative-pressure cycle sections of respective fluid control units preferably are overlapped with each other.

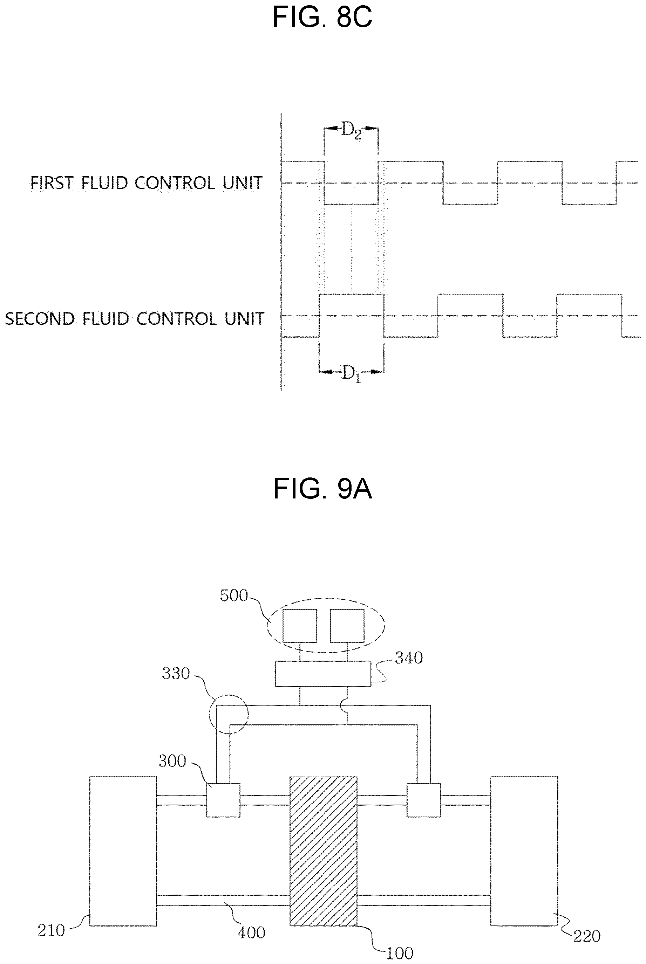

This will be described in detail with reference to the drawing. As shown in FIG. 8B, the cycles of each fluid control unit are the same, the positive-pressure section and the negative-pressure section of one fluid control unit have the same length, and the positive-pressure section of another fluid control unit is longer than the negative-pressure section. Alternatively, as shown in FIG. 8C, the operating phases of two fluid control units are different from each other, and the positive pressure cycle of any one fluid control unit and the positive pressure cycle of another fluid control unit are overlapped with each other for a predetermined time. That is, the section Di of the positive pressure cycle in one fluid control unit is preferably adjusted to be longer than the section $D_2$ of the negative pressure cycle in another fluid control unit.

If the positive pressure cycle and the negative pressure cycle of both fluid control units completely have the same length, an amount of the electrolyte smaller than an amount of the electrolyte that should be generally supplied is supplied to the battery cell. Thus, in order to compensate for a shortfall, the length of the positive pressure cycle of either or both of the fluid control units is set to be longer than the length of the negative pressure cycle, thus maintaining the flow rate of the electrolyte supplied to the battery cell above a certain level.

Although it is shown in the drawing that two fluid control units have the same cycle, the cycles of both fluid control units may be equal to or different from each other. As long as the operating purpose of the above-described fluid control unit is achieved, any shape is possible. Alternatively, the fluid control units may be set to have the same cycle but different capacities, thus achieving the same purpose.

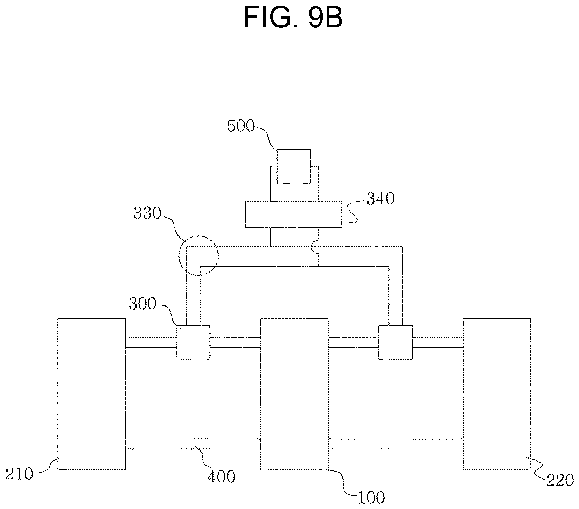

In order to adjust the cycle of the pressure supplied to each fluid control unit 300 as described above, as shown in FIGS. 9A and 9B, it is preferable that a pressure control valve 340 be further provided between the pressure generator and the fluid control unit. The pressure control valve is used to alternately supply the positive pressure and the negative pressure to the fluid control unit, and includes a structure that may freely adjust the opening and closing of a port according to the above-described specific pressure supply cycle, and all types of devices corresponding to the structure.

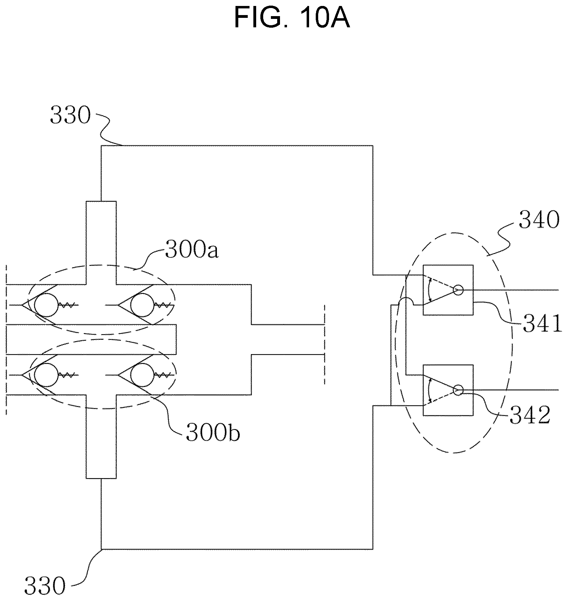

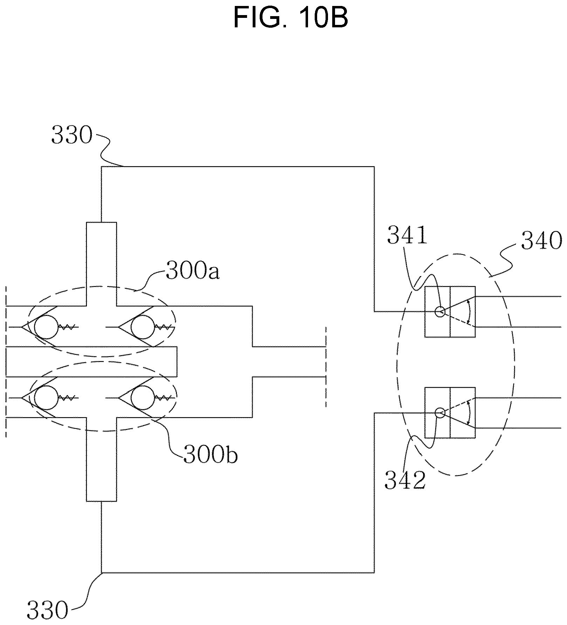

The pressure control valve 340 will be described in detail with reference to FIGS. 10A and 10B. As shown in FIG. 10A, pressure control valves may be provided, respectively, on the fluid transfer pipes extending from the two different pressure generators. The pressure control valve may include a pressure-control-valve housing 341, and a switching pipe 342 provided in the housing. Here, the pressure-control-valve housing has a pipe (inlet pipe) causing the fluid to flow into the housing, and a pipe (discharge pipe) causing the fluid to flow from the inside of the housing to the outside. By adjusting the number of the pipes, the switching form of the switching pipe may be freely adjusted.

Furthermore, as shown in FIG. 10B, both positive pressure and negative pressure are simultaneously connected to each pressure control valve 320, and the pressure control valve may selectively supply the positive pressure or the negative pressure to the fluid control unit 300 according to a required cycle. Alternatively, in order to form medium pressure between the positive pressure and the negative pressure, a separate port or an external valve may be provided to connect two pressure supply pipes to each other.

For instance, when one pressure control valve includes one inlet pipe and two discharge pipes, the pressure control valve has a structure connected to one pressure generator and two fluid control units. Therefore, if it is required to change the type of pressure while the positive pressure is supplied to any one fluid control unit, the connecting form of the switching pipe and the discharge pipe may be changed to supply the positive pressure to another fluid control unit.

As shown in the drawing, the housing may include one inlet pipe and two discharge pipes. However, the housing may include two inlet pipes and one discharge pipe. According to the numbers of pressure supply units and fluid control units, the numbers of inlet pipes and discharge pipes may be freely adjusted. The present invention limits the numbers of the pipes.

Furthermore, as described above, when the section Di of the positive pressure cycle is adjusted to be longer than the section $D_2$ of the negative pressure cycle, moments when the positive pressure is supplied to all the fluid control units occur because the section of the positive pressure cycle is longer than the section of the negative pressure cycle. If the switching pipe is provided as described above, it is difficult to supply the positive pressure to all the fluid control units. Thus, it is preferable that an adjusting valve (not shown) such as a solenoid valve is provided outside the housing instead of the switching pipe.

For example, when the solenoid valve is connected to the discharge pipe connected to each fluid control unit and the positive pressure is supplied to any one fluid control unit, the solenoid valve of the discharge pipe connected to the corresponding fluid control unit is opened. When the positive pressure is supplied to both of the first fluid control unit and the second fluid control unit, the solenoid valves of all of the discharge pipes are opened. In this way, the positive pressure cycle is adjusted as described above. Alternatively, the positive pressure and the negative pressure may be independently controlled for each battery cell by employing the configuration of FIG. 10B.

AS shown in FIGS. 9A and 9B, the redox flow battery may include a plurality of pressure generators 500. However, as shown in FIG. 9B, one pressure generator may simultaneously generate the positive pressure and the negative pressure, and different outlets may be provided for the generated positive pressure and negative pressure, thus reducing energy consumption and maximizing space utilization.

Furthermore, the redox flow battery may further include an electrolyte inflow preventing component 350 in the fluid transfer pipe 330.

Generally, the redox flow battery contains vanadium oxide, hydrazine, halogen compounds, and other acids. In order to transport these substances, a transfer pipe having acid resistance should be used. However, since the special transfer pipe is more expensive than a common pipe, it is preferable to use a common metal pipe or a pneumatic pipe or a pneumatic tube, except for a pipe for transferring the electrolyte.

In order to apply pressure to the electrolyte path using the fluid as described above, the fluid transfer pipe for supplying the fluid should be provided to communicate with the electrolyte path. However, in the process of supplying the positive pressure or the negative pressure, the electrolyte may flow back to the fluid transfer pipe.

Therefore, in order to solve the problem, the electrolyte inflow preventing component selected from a diaphragm, a cutoff valve, a check valve, and a float valve may be provided in the fluid transfer pipe, thus preventing the backflow of the electrolyte.

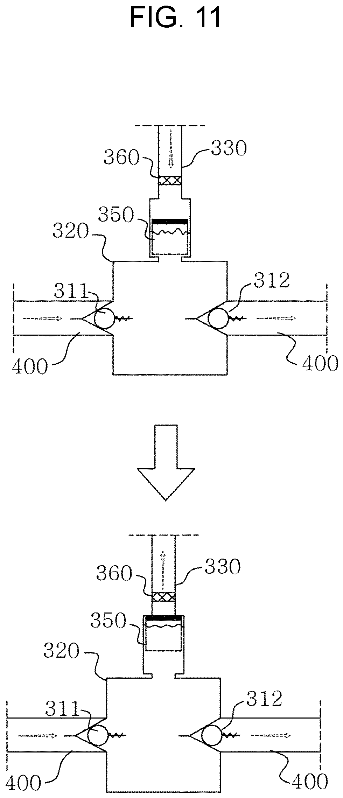

An example of the electrolyte inflow preventing component 350 will be described in detail with reference to FIG. 11. The electrolyte inflow preventing component is provided adjacent to the fluid transfer pipe and the fluid control unit housing, and may be a sheet-shaped object that may be floated by the electrolyte, have pores therein like a net structure, and close the fluid transfer pipe by a surface coming into contact with the fluid transfer pipe.

As shown in the top of FIG. 11, the electrolyte inflow preventing component preferably has a predetermined diameter to float in the fluid transfer pipe. The diameter is preferably smaller than the diameter of the fluid transfer pipe. Meanwhile, the diameter of a portion of the fluid transfer pipe that is directly connected to the control-unit housing is smaller than the diameter of the electrolyte inflow preventing component, thus preventing the electrolyte inflow preventing component from being dislodged.

As shown in the bottom of FIG. 11, if the negative pressure is applied to the fluid transfer pipe and the level of the electrolyte in the control-unit housing rises, the electrolyte inflow preventing component blocks the fluid transfer pipe to serve as a kind of valve, thus preventing the electrolyte from being introduced.

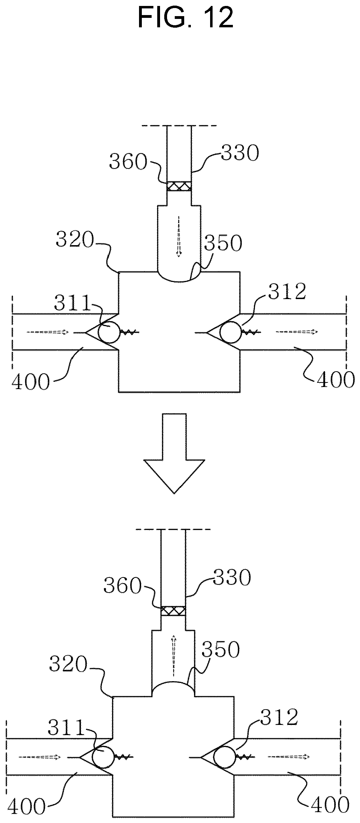

In the case of the float valve as shown in FIG. 11, it may be difficult to completely prevent the fluid from being introduced into the control-unit housing by the operation of the pump for supplying the negative pressure and the positive pressure. Therefore, a diaphragm type of electrolyte inflow preventing component may be applied to completely cover a section of the fluid transfer pipe as shown in FIG. 12.

This will be described in detail with reference to FIG. 12. The diaphragm completely closes the connection of the fluid transfer pipe and the control-unit housing, and is made of an elastic material to effectively transmit pressure through the fluid transfer pipe into the control-unit housing. In other words, as shown in the top of FIG. 12, when the positive pressure is transmitted to the control-unit housing, the diaphragm is also elongated in a direction from the fluid transfer pipe to the control-unit housing according to the positive pressure. Therefore, since the pressure in the control-unit housing rises, the check valve is naturally operated, so that the electrolyte flows towards the battery cell.

As shown in the bottom of FIG. 12, when the negative pressure is transmitted to the control-unit housing, the diaphragm is also elongated in a direction from the control-unit housing to the fluid transfer pipe according to the negative pressure. In this case, as the pressure in the control-unit housing is lowered, the check valve is operated, so that the electrolyte flows in a direction from the electrolyte tank to the control-unit housing.

The electrolyte inflow preventing component is a diaphragm that may be deformed by a floater or pressure as shown in FIG. 11 or 12 and may be formed to completely block the fluid transfer pipe. However, any structure may be applied to the present invention, as long as the structure prevents the electrolyte from being introduced and transmits the pressure to the fluid control unit.

Furthermore, the electrolyte inflow preventing component may use by combining one structure or two or more different structures. That is, one or two or more floater or diaphragm types of electrolyte inflow preventing components may be used in combination.

Since the electrolyte inflow preventing component is configured to be in direct contact with the electrolyte, it is acid resistant. As such, the diaphragm type component is preferably made of a material having fluidity. Examples of the material may include polymer such as polypropylene, polyethylene, or polystyrene, rubber such as acrylic rubber or fluorine rubber, or metal such as aluminum. Any other materials having the above-described physical properties may be used without limitation.

Furthermore, the redox flow battery may further include a fluid filter 360 in the fluid transfer pipe 330 so as to eliminate impurities that may be mixed with the electrolyte.

In the case where the fluid transmitting pressure to the fluid control unit is gas containing air or oxygen, the electrolyte may be oxidized, so that the charging/discharging efficiency of the battery cell may be deteriorated. In order to solve the problem, a fluid filter may be further provided in the fluid transfer pipe as shown in FIGS. 9A and 9B to prevent impurities such as oxygen from being mixed with the electrolyte. Here, the fluid filter may be installed in each fluid control unit or in one fluid transfer pipe by connecting all the fluid control units, and may be replaced with a new one for the purpose of repair.

In the present invention, the fluid filter is used to eliminate components, such as oxygen or water, which may deteriorate the performance of the electrolyte. It is preferable to include a filter capable of removing components affecting the performance of the electrolyte as well as the above-described components. For instance, a deoxidizer or an oxygen removal device may be mounted to a portion of the fluid transfer pipe.

The redox flow battery may further include an electrical terminal for electrical connection from an outside, a control unit and a monitor capable of controlling the fluid control unit, and a terminal or a connector that connects the above-described components to each other, in addition to the above-described components.

FIG. 13 shows an embodiment in which a high-capacity system is formed by connecting the above-described plurality of battery modules to each other. The battery modules 100 may be electrically connected in series or in parallel, or may be electrically configured independently. The battery module is connected to the pressure generator to transmit pressure from the outside for the purpose of operating the fluid control unit of each battery module. One or a plurality of pressure generator(s) may be provided depending on the size and number of the battery modules.

In the case of having the plurality of battery modules as shown in FIG. 13, the plurality of fluid control units should be uniformly controlled. Particularly, since the redox flow battery has the deviation of performance depending on the flow rate of the electrolyte flowing in the cell, it is important to ensure the flow rate of the electrolyte within a predetermined range in each battery cell. However, when the fluid control unit is not designed appropriately, it is difficult that the plurality of fluid control units supplies the electrolyte of a uniform flow rate to the battery cell. Hence, the performance of each battery module is changed, so that the performance of the entire redox flow battery may be significantly deteriorated.

Moreover, since the redox flow battery uses the liquid electrolyte having high viscosity, the power consumption of the pressure generator may be increased to uniformly supply the electrolyte to each battery cell and circulate the electrolyte, and thereby the pressure generator should be designed in consideration of the power consumption. Furthermore, operational deviation may occur between the plurality of fluid control units, and it is difficult for the flow of the fluid applied from the pressure generator to uniformly reach each fluid control unit at the same time. Hence, it is also important to control the flow of the fluid.

The redox flow battery includes the fluid control unit that controls the flow of the electrolyte, and checks and controls several factors that may affect the supply of the electrolyte, thus enhancing the efficiency of the battery.

First, the fluid control unit is configured to transmit pressure transmitted through the pressure generator to the electrolyte, thus circulating the electrolyte in the module. The fluid control unit may mainly include an electrolyte flow space $Vh_{electrolyte}$ located in the control-unit housing, and a free space $Vh_{free}$ that is physically or conceptually separated from the electrolyte flow space to transmit the pressure to the fluid control unit. In detail, the space $Vh_{electrolyte}$ may define a space between the pair of check valves connected to the control-unit housing, or define a space leading to the check valve and the electrode of the cell. In the present invention, at least one of the two definitions preferably satisfies conditions of the present invention.

However, the free space may include the volume of the space between the fluid control unit and the pressure generator as well as the interior of the fluid control unit. The structure of the fluid control unit may be implemented without the necessity of separately forming a space corresponding to the interior of the fluid control unit in the $Vh_{free}$.

For instance, when pressure is applied to the fluid control unit, the space $Vh_{electrolyte}$ of the control-unit housing is reduced, so that the electrolyte is discharged to the outside of the control-unit housing. When pressure applied to the fluid control unit is reduced or negative pressure is applied, the space $Vh_{electrolyte}$ is increased, so that the electrolyte is introduced into the control-unit housing space. By repeating the operation, the fluid control unit supplies the electrolyte to the cell by the fluid pressure transmitted from the pressure generator.

In the present invention, among the maximum volume of the electrolyte in the fluid control unit when the electrolyte is introduced by a change in pressure and the minimum volume of the electrolyte in the fluid control unit when the electrolyte is supplied to the battery cell, the maximum volume of the introduced electrolyte that is important for the actual flow supply performance of the electrolyte is defined as $V_h = V_{h\_electrolyte\_max}$, and respective parameters will be described.

If the plurality of fluid control units is connected to one battery cell, $V_h$ becomes the sum of the maximum volumes of the electrolytes introduced into the respective fluid control units. If the battery cells or the fluid control units connected to one pressure generator have different shapes and volumes, at least one battery cell-fluid control unit set satisfies parameter values described in the present invention. It is to be interpreted that this falls within the purview of the present invention.

For instance, if $V_h$ is small, the volume in which the diaphragm may be deformed also becomes small. In this case, time when the diaphragm reaches a maximum deformable point is shortened by the fluid transmitted from the pressure generator. Furthermore, when one fluid transfer pipe 330 has a plurality of fluid control units, the fluid control unit (hereinafter referred to as a fluid control unit 1) whose diaphragm is relatively easily deformed due to the thickness deviation of the fluid control unit or the diaphragm where a large flow rate of fluid is transmitted from the pressure generator is shorter than another fluid control unit in time when the diaphragm reaches the maximum deformation point. Thus, the flow rate of the electrolyte rapidly increases in an initial stage. However, if the diaphragm reaches the maximum deformation point, the diaphragm may not be deformed, so that the electrolyte does not flow any longer and thereby the electrolyte circulating in the battery cell stops flowing. However, in another fluid control unit (hereinafter referred to as a fluid control unit 2), the diaphragm does not reach the maximum deformation point, so that the electrolyte is transmitted to the battery cell. Therefore, a deviation in behavior occurs between the battery cells.

If the pressure of the fluid transmitted from the pressure generator is changed from the positive pressure to the negative pressure before the diaphragm reaches the maximum deformation point so as to minimize the deviation, the fluid control unit 1 may smoothly induce the flow of the electrolyte. However, in the fluid control unit 2 having the low flow rate of the fluid transmitted from the pressure generator, the deformation of the diaphragm is relatively little. When the cycles of the positive pressure and the negative pressure of the fluid transmitted from the pressure generator are short, the diaphragm is not sufficiently deformed, so that the electrolyte may not flow.

In contrast, if $V_h$ is large, the volume in which the diaphragm may be deformed also becomes large, time when the diaphragm reaches a maximum deformable point is relatively long, and spare volume is large, so that it is possible to reduce the operating deviation of the fluid control unit. However, if the volume of the control-unit housing of the fluid control unit increases beyond a certain level, a kind of storage place is created, so that a long time is required until another fluid control unit is operated, and thereby the power consumption of the pump increases or the deviation of the flow rate of the electrolyte increases.

In the case of having the plurality of fluid control units, a difference may occur in the flow rate of the electrolyte due to the operating deviation of the respective fluid control units. For instance, if ten fluid control units are connected to one fluid transfer pipe 330, the flow rate of the electrolyte may also be varied due to various factors, such as a distance of the fluid transfer pipe to each fluid control unit, the manufacturing deviation of the diaphragm in the fluid control unit, the assembly deviation of the fluid control unit, the connecting deviation between the fluid control unit and the battery cell, or the deviation of the flow resistance of the electrolyte in the battery cell.

Such a flow deviation may cause the performance deviation of the battery cell, thus deteriorating the efficiency and stability of the entire system composed of the plurality of battery cells. In order to overcome the problems, a high-capacity pressure generator may be used to allow the fluid control unit providing the minimum flow rate among all the fluid control units to have a flow rate above a certain level and be operated at a value above the critical value of the flow rate capable of ensuring the performance. However, in this case, the power consumption of the pressure generator increases and the flow rate of another fluid control unit increases, so that internal pressure may increase and the battery cell may be damaged. Accordingly, it is important to ensure a uniform flow rate by minimizing the operating deviation of the fluid control unit while guaranteeing the efficiency of the system and the operating stability of the battery cell.

Furthermore, the flow rate of the electrolyte is directly related to operating environment such as the volume of the electrolyte participating in an oxidation-reduction reaction that mainly affects the electrochemical reaction of the electrolyte in the battery cell, for brevity, reaction volume $V_c$ and an output density. The reaction volume $V_c$ is generally defined as a product of the effective area of the separator where the ion exchange of the electrolyte actually occurs and the thickness of the electrode. However, some redox flow battery may be operated without any of the separator, the electrode, and the separation plate, and may be different in configuration of the path where the electrolyte flows.

In view of that, the present invention defines the reaction volume. In detail, the reaction volume means a product of an area of the smallest component on the basis of the separator, the separation plate, the electrode, and a collector plate that are the components of the battery cell in paths with which the electrolyte is in direct contact, and a length of the path that is the shortest in facing distance among the paths of the electrolyte.

In this regard, the facing distance means a linear distance between one contact surface coming into contact with the electrolyte of the electrolyte path and another contact surface opposite to the contact surface, namely, the length of the narrowest place in the electrolyte path. Furthermore, the electrolyte path means all paths along which the electrolyte flows from the electrolyte tank and circulates back to the electrolyte tank. The paths of the electrolyte path may embrace the electrolyte path 400 shown in the drawings, and all places where the electrolyte comes into contact and passes, such as spaces between the housing in the fluid control unit, the positive electrode, or the negative electrode, the separator, and the separation plate.

As an example of the facing distance, when a portion whose facing distance is the shortest among the paths of the electrolyte is a cylindrical pipe, the facing distance is the diameter of the pipe. When a portion having the narrowest width among the paths of the electrolyte is a portion between the separator and the electrode, the length of a corresponding width becomes the facing distance.

The redox flow battery preferably satisfies the following Equation 1 in consideration of the above-described characteristics.

$$[Equation\ 1]$$

$$V_h \geq 0.05 V_c$$

Furthermore, the redox flow battery may adjust parameters related to the electrolyte introduced into the fluid control unit as well as the cycles of the positive pressure and the negative pressure supplied by the pressure generator.

If the pressure generator generates the positive pressure and the negative pressure and transmits the pressures to the fluid control unit, the pressure in the fluid control unit is changed and the diaphragm is moved, thus creating the flow of the electrolyte. Here, the flow rate of working fluid transmitted to the fluid control unit, the range of the pressure that may be generated, and the generating cycles of the positive pressure and the negative pressure are important. The fluid control unit supplies the electrolyte to the battery cell while the positive pressure and the negative pressure are repeated. Thus, they should be appropriately controlled so as to minimize the power consumption of the pressure generator and ensure the required flow rate of the electrolyte.

The redox flow battery may be varied in optimum vale of the flow rate of the electrolyte depending on the type of the applied electrolyte. However, for the purpose of stable performance, the average flow rate of the electrolyte per minute ($m^3$/min) caused by the fluid control unit is preferably equal to or greater than 3% of the reaction volume $V_c$ (Cf. Embodiment 2). Here, a flow rate in which the average flow rate per minute ($m^3$/min) corresponds to 3% of the reaction volume $V_c$ is defined as a critical flow rate $Q_{min}$.

When the flow rate of the electrolyte is equal to or greater than the critical flow rate, the performance of the battery cell can be uniformly maintained. Thus, all the fluid control units preferably supply the electrolyte equal to or greater than the critical flow rate to the battery cell. In order to satisfy this condition, in the redox flow battery the operating cycle T of the fluid control unit preferably satisfies the following Equation a. When the value of $V_h/V_c$ is fixed, the operating cycle of the fluid control unit means the pressure conversion cycle of the required positive pressure and negative pressure on the basis of the fluid control unit having the largest $V_h$.

Since the critical flow rate $Q_{min}$ defines that the volume of the electrolyte per minute is equal to or greater than 3% of the reaction volume $V_c$, the maximum cycle may be set by putting the corresponding values.

$$[Equation\ a]$$

$$T \leq V_h/Q_{min}$$

However, if the cycle is too short, a cycle in which internal pressure of the fluid control unit is changed becomes shorter than a reaction speed of the control valve and the check valve, so that the electrolyte may not flow. Thus, it is preferable to satisfy the following Equation 2.

[Equation 2]

$$0.05(\text{sec}) \leq T \leq V_h/Q_{min}$$

As described above, in order for the fluid control unit to supply the flow rate equal to or greater than the critical value, a method in which T is shortened and the electrolyte is supplied at a fast cycle, and a method in which T is increased and the amount of the electrolyte supplied in one cycle is increased may be employed. However, if T is shortened, the required volume of $V_h$ may be reduced, but it is difficult to guarantee the stable operation of the fluid control unit due to the limit of the reaction speed of the check valve, the limit of the reaction speed of the control valve, and the component and assembly deviation that may actually occur. In contrast, if T is long, the volume of $V_h$ should be increased, so that the entire volume of the system increases and some of the fluid control units may not be operated due to the component and assembly deviation of the fluid control unit. Hence, in order to stably operate the plurality of battery cells, the redox flow battery having the pressure generator and the fluid control unit should satisfy the above-mentioned conditions.

The redox flow battery preferably satisfies the following Equations 1 and 2 so as to have the optimum efficiency, in consideration of the flow rate of the electrolyte supplied to the battery cell in the fluid control unit, the volume of the electrolyte reacting in the battery cell, and the cycle of the pressure supplied to the fluid control unit. Meanwhile, when the fluid control unit has a plurality of different cycles T, at least one cycle preferably satisfies Equation 2. In the case of having the plurality of fluid control units, at least one fluid control unit preferably satisfies Equation 1.

As described above, the redox flow battery may smoothly circulate the electrolyte to the battery cell or stack without using the expensive chemical pump. Furthermore, since each battery module may have the electrolyte tank or a predetermined number of battery modules may share the electrolyte tank, it is much shorter in electrolyte circulation distance than the conventional redox flow battery, and thereby it is possible to reduce the use of the expensive acid-resistant transfer pipes.

Furthermore, since the electrolyte circulation distance is short, a response time may be significantly improved as compared to the conventional redox flow battery. Further, since the electrolyte tank may be separated and the electrolyte circulates only in each battery module, a shunt current is not generated.

The redox flow battery can effectively realize the high-voltage and high-capacity energy storage system referred to as an energy storage system. Furthermore, since it is unnecessary to use a plurality of expensive chemical pumps, manufacturing cost can be saved. Since it is possible to independently install and replace each battery module, operating efficiency can be improved. Moreover, since the high-capacity energy storage system may be implemented for each battery module having similar performance in consideration of the performance deviation of the battery module, the efficiency of the system can be improved.

Hereinafter, the redox flow battery will be described in detail with reference to embodiments and comparative examples. Since the following embodiments and comparative examples aid in understanding the present invention, the present invention is not limited to the following embodiments and comparative examples.

The specification and properties manufacturing method of specimens manufactured according to the following embodiments and comparative examples are as follows.

(Module)

Fluid control unit: housing having the volume of 8,000 mm$^3$, equipped with the solenoid valve, and made of a PVC (polyvinylchloride) material.

Pressure generator: positive pressure-negative pressure convertible pump having the power consumption of maximum 0.1kW and the pressure output of -0.1MPa to 0.1MPa, and pump having the check valve structure so that two ports generate the positive pressure and the negative pressure, respectively.

Diaphragm: ethylene-propylene-diene monomer rubber and fluorine rubber
Positive electrode, negative electrode: carbon fiber, graphite, carbon composite

(Electrolyte)

The electrolyte was a vanadium (V) electrolyte, the concentration of vanadium ions was 1.6 mol, and sulfuric acid was contained.

(Maximum volume (Vh) of electrolyte)

After the electrolyte tank and the pump are connected to the fluid control unit, the negative pressure was applied to the fluid control unit through the pump to transfer the electrolyte to the fluid control unit. At this time, the maximum flow rate was measured.

(Reaction volume (Vc) of electrolyte)

The reaction area of the battery cell was 70 mm in width and 70 mm in length, and the compressed thickness of the electrode was 2 mm, and the width of the narrowest portion in the electrolyte path was 2 mm. Finally, the reaction volume of the electrolyte was 9,800 mm$^3$.

(Current efficiency)

The charging and discharging operations were performed with the voltage range from 1.2V to 1.6V and the current density from 40mA/cm$^2$ to 200mA/cm$^2$. This was one cycle. After ten cycles are repeated, an average value was calculated.

(Flow deviation ratio)

The maximum volume of the electrolyte measured for a predetermine time was put into the following Equation 3, so that the flow deviation ratio was calculated.

$$[\text{Equation 3}]$$

$$\text{Flow deviation ratio} = (L\text{-}S)/L$$

(In Equation 3, L represents a maximum value among the flow rates of the respective fluid control units, and S represents a minimum value among the flow rates of the respective fluid control units.)

(Efficiency deviation ratio)

The energy efficiency of the battery cell connected to each fluid control unit was measured and then put into the following Equation 4, so that the efficiency deviation ratio was calculated.

$$[\text{Equation 4}]$$

$$\text{Efficiency deviation ratio} = (M\text{-}N)/M$$

(In Equation 4, M represents a maximum value among the energy efficiencies of the battery cells, and N represents a minimum value among the energy efficiencies of the battery cells.)

(Embodiment 1, Comparative examples 1 and 2)

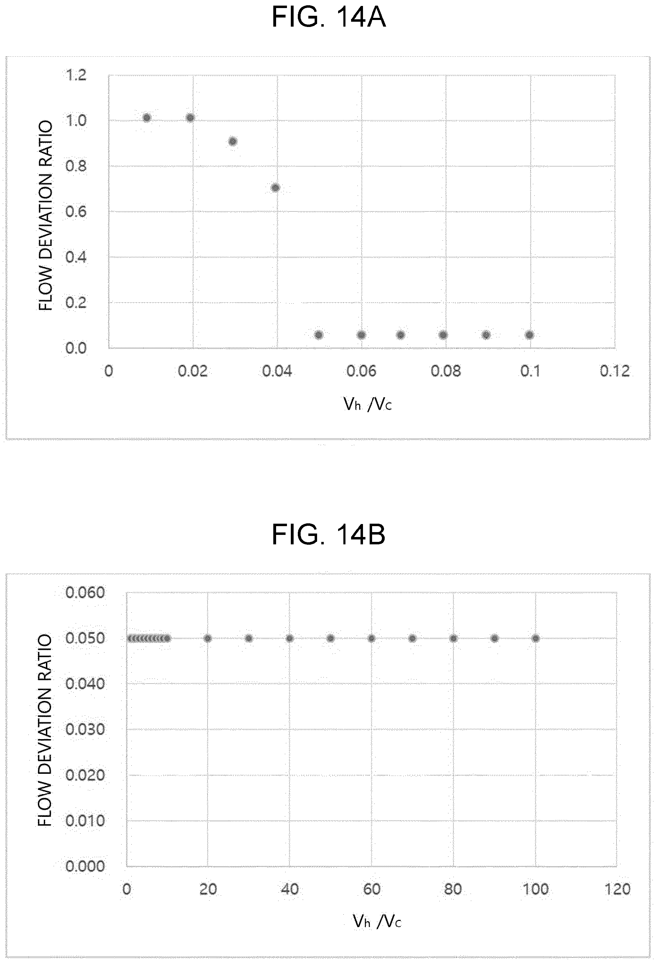

A total of ten fluid control units were prepared and connected to one pressure generator, and two fluid control units were connected to one electrolyte tank. Furthermore, the flow rate of the electrolyte transferred through each fluid control unit was individually measured. Here, the ratio of the maximum volume ($V_h$) of the electrolyte to the reaction volume ($V_c$) of the electrolyte was set to be 0.05 (Embodiment 1), 0.02 (Comparative example 1), and 20 (Comparative example 2), respectively, and the flow deviation ratio was measured and described in FIGS. 14A to 14C and Table 1.

[Table 1]

|  | $V_h/V_c$ | Flow deviation ratio |
|---|---|---|
| Embodiment 1 | 0.05 | 0.05 |
| Comparative example 1 | 0.02 | 1.0 |
| Comparative example 2 | 20 | 0.05 |

When the flow deviation ratio is 1, it means that at least one of the plurality of fluid control units may not supply the electrolyte to the battery cell. The flow rate was described on the basis of the positive electrolyte, but the negative electrolyte was measured under the same conditions.

When $V_h/V_c$ was 0.05 (5%) or more as shown in Table 1 and FIGS. 14A and 14B, it can be seen that the flow deviation ratio is abruptly reduced. It was found that this is related to the minimum value of the cycle T to ensure the minimum flow rate. As described above, when $V_h/V_c$ was small, the amount of the electrolyte supplied to the battery cell by the fluid control unit for each positive-pressure and negative-pressure conversion cycle T was reduced, so that the electrolyte stopped flowing. Thus, it can be seen that the efficiency was abruptly deteriorated.

In contrast, when $V_h/V_c$ was large as in comparative example 2, it can be seen that some of the fluid control units were not operated due to the assembly deviation of the fluid control unit, and thus the efficiency was deteriorated.

(Embodiment 2)

In order to measure the flow critical value, under the same conditions as embodiment 1, experiments were conducted in the range where the average flow rate per minute is from 0.5% to 3000% of $V_c$ and a change in efficiency of the battery cell was measured. The efficiency deviation ratio calculated according to Equation 4 in this range was shown. Where the average flow rate per minute is from 10% of $V_c$ or more, there was no definite difference in result values. Thus, the value ranging from 0.5% to 10% was shown.

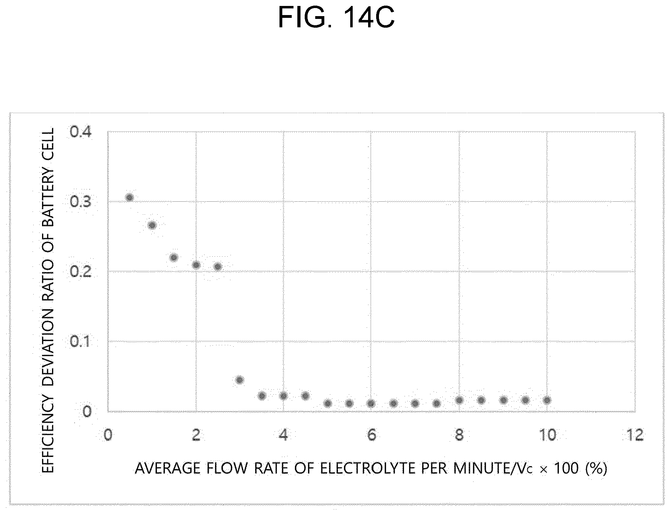

When the flow rate of the electrolyte per minute was 3% or more of Vc as shown in FIG. 14, it can be seen that the efficiency deviation between the battery cells was significantly reduced. Therefore, the critical flow rate is preferably 3% or more $V_c$.

Although the present invention was described with reference to specific embodiments shown in the drawings, it is apparent to those skilled in the art that the present invention may be changed and modified in various ways without departing from the scope of the present invention, which is described in the following claims.

**Claims**

**1.** A method for the operation a redox flow battery, the redox flow battery comprising:

one or more battery modules each including a battery cell, electrolyte tanks, an electrolyte path, a separator, a separation plate, an electrode, a collector plate and at least one fluid control unit configured to transmit externally generated pressure to the electrolyte path,
wherein each battery module or a predetermined number of battery modules is/are configured to independently circulate an electrolyte to perform charging/discharging operations,
wherein the method satisfies the following Equations 1 and 2:

$$[\text{Equation 1}] \quad Vh \geq 0.05Vc,$$

and

$$[\text{Equation 2}] \quad 0.05(\text{sec}) \leq T \leq Vh/Qmin,$$

wherein in Equations 1 and 2, Vh is a maximum volume of the electrolyte introduced into the fluid control unit, Qmin is a critical flow rate at which a volume of the electrolyte flowing per minute corresponds to 3% of a reaction volume Vc, and T is an operating cycle of the fluid control unit, wherein the reaction volume means a product of an area of the smallest component on the basis of the separator, the separation plate, the electrode, and a collector plate that are the components of the battery cell in paths with which the electrolyte is in direct contact, and a length of the path that is the shortest in facing distance among the paths of the electrolyte.

2.  The method of claim 1, wherein each battery module comprises:

one or more battery cells each including a positive electrode and a negative electrode, and a separation plate stacked on an outer surface of a separator;
a pair of electrolyte tanks provided in the battery module to supply a positive-electrode electrolyte or a negative-electrode electrolyte to the positive electrode or the negative electrode, respectively;
an electrolyte path connecting the battery cell and each of the electrolyte tanks to transfer the electrolyte; and
the at least one fluid control unit provided in the electrolyte path and configured to transmit the externally generated pressure from outside the battery module to the electrolyte path, thereby controlling a flow of the electrolyte.

3.  The method of claim 1, wherein each of the at least one fluid control unit comprises:

at least one check valve provided in the electrolyte path to induce the flow of the electrolyte in one direction; and
a fluid transfer pipe provided adjacent to the check valve to communicate with the electrolyte path, and configured to directly transmit the externally generated pressure from outside the respective battery module to the electrolyte path.

4.  The method of claim 1, wherein each of the at least one fluid control unit comprises:

a control-unit housing provided at an end of the electrolyte path, and located in one of the electrolyte tanks;
a fluid transfer pipe configured to directly transmit the externally generated pressure from outside the respective battery module to the control-unit housing; and
at least one check valve provided on a side of the control-unit housing and configured to induce the electrolyte from each of the electrolyte tanks to the control-unit housing, and to simultaneously induce the electrolyte from the control-unit housing to the electrolyte path.

5.  The method of claim 1, wherein each battery module comprises two or more fluid control units.

6.  The method of claim 1, wherein each battery module comprises two fluid control units, and a pressure supply cycle of each of the two fluid control units is configured such that sections of a positive pressure cycle or a negative pressure cycle of any one of the fluid control units are overlapped with those of the other fluid control unit.

7.  The method of claim 1, wherein each of the at least one fluid control unit further comprises at least one pressure control valve.

8.  The method of claim 1, wherein the fluid control unit comprises therein at least one of electrolyte inflow preventing component selected from the group consisting of a diaphragm, a cutoff valve, a check valve, or a float valve.

9.  The method of claim 1, wherein the fluid control unit further comprises a fluid filter.


**Patentansprüche**

1.  Verfahren zum Betrieb einer Redox-Flow-Batterie, wobei die Redox-Flow-Batterie umfasst:

ein oder mehrere Batteriemodule, die jeweils eine Batteriezelle, Elektrolyttanks, einen Elektrolytpfad, einen Separator, eine Trennplatte, eine Elektrode, eine Kollektorplatte und
mindestens eine Fluidsteuerungseinheit umfassen, die so konfiguriert ist, dass sie von außen erzeugten Druck auf den Elektrolytpfad überträgt,
wobei jedes Batteriemodul oder eine vorbestimmte Anzahl von Batteriemodulen so konfiguriert ist/sind, dass sie unabhängig voneinander einen Elektrolyten zirkulieren, um Lade-/Entladevorgänge durchzuführen,
wobei das Verfahren die folgenden Gleichungen 1 und 2 erfüllt:

[Gleichung 1] Vh≥ 0,05Vc ,

und

[Gleichung 2] 0,05(sec) ≤ T ≤ Vh/Qmin ,

wobei in den Gleichungen 1 und 2 Vh ein maximales Volumen des in die Fluidsteuereinheit eingeleiteten Elektrolyten ist, Qmin eine kritische Durchflussrate ist, bei der ein Volumen des pro Minute fließenden Elektrolyten 3 % eines Reaktionsvolumens Vc entspricht, und T ein Betriebszyklus der Fluidsteuereinheit ist, wobei das Reaktionsvolumen ein Produkt aus einer Fläche der kleinsten Komponente auf der Basis des Separators, der Trennplatte, der Elektrode und einer Kollektorplatte, die die Komponenten der Batteriezelle in Pfaden sind, mit denen der Elektrolyt in direktem Kontakt ist, und einer Länge des Pfades, der der kürzeste in Bezug auf den Abstand unter den Pfaden des Elektrolyten ist, bedeutet.

2. Verfahren nach Anspruch 1, wobei jedes Batteriemodul umfasst:

   eine oder mehrere Batteriezellen, von denen jede eine positive und eine negative Elektrode aufweist, und eine Trennplatte, die auf einer Außenfläche eines Separators gestapelt ist;
   ein Paar Elektrolyttanks, die in dem Batteriemodul vorgesehen sind, um der positiven Elektrode bzw. der negativen Elektrode einen positiven Elektrolyt oder einen negativen Elektrolyt zuzuführen;
   einen Elektrolytpfad, der die Batteriezelle und jeden der Elektrolyttanks verbindet, um den Elektrolyt zu übertragen; und
   die mindestens eine Fluidsteuereinheit, die im Elektrolytpfad vorgesehen und so konfiguriert ist, dass sie den extern erzeugten Druck von außerhalb des Batteriemoduls an den Elektrolytpfad überträgt, wodurch ein Fluss des Elektrolyts gesteuert wird.

3. Verfahren nach Anspruch 1, wobei jede der mindestens einen Fluidsteuerungseinheiten umfasst:

   mindestens ein Rückschlagventil im Elektrolytpfad, um den Fluss des Elektrolyten in eine Richtung zu lenken; und
   ein Fluidübertragungsrohr, das neben dem Rückschlagventil vorgesehen ist, um mit dem Elektrolytpfad in Verbindung zu stehen, und das so konfiguriert ist, dass es den extern erzeugten Druck von außerhalb des jeweiligen Batteriemoduls direkt auf den Elektrolytpfad überträgt.

4. Verfahren nach Anspruch 1, wobei jede der mindestens einen Fluidsteuerungseinheit umfasst:

   ein Gehäuse für die Steuereinheit, das an einem Ende der Elektrolytstrecke vorgesehen ist und sich in einem der Elektrolytbehälter befindet;
   ein Fluidübertragungsrohr, das so konfiguriert ist, dass es den extern erzeugten Druck von außerhalb des jeweiligen Batteriemoduls direkt an das Gehäuse der Steuereinheit überträgt; und
   mindestens ein Rückschlagventil, das an einer Seite des Gehäuses der Steuereinheit vorgesehen und so konfiguriert ist, dass es den Elektrolyt aus jedem der Elektrolyttanks in das Gehäuse der Steuereinheit leitet und gleichzeitig den Elektrolyt aus dem Gehäuse der Steuereinheit in den Elektrolytweg leitet.

5. Verfahren nach Anspruch 1, wobei jedes Batteriemodul zwei oder mehr Fluidsteuereinheiten umfasst.

6. Verfahren nach Anspruch 1, wobei jedes Batteriemodul zwei Fluidsteuerungseinheiten umfasst und ein Druckversorgungszyklus jeder der beiden Fluidsteuerungseinheiten so konfiguriert ist, dass Abschnitte eines Überdruckzyklus oder eines Unterdruckzyklus einer der Fluidsteuerungseinheiten mit denen der anderen Fluidsteuerungseinheit überlappt werden.

7. Verfahren nach Anspruch 1, wobei jede der mindestens einen Fluidsteuerungseinheiten ferner mindestens ein Druckregelventil umfasst.

8. Verfahren nach Anspruch 1, wobei die Flüssigkeitssteuereinheit mindestens eine Komponente zur Verhinderung des Einströmens von Elektrolyt enthält, die aus der Gruppe ausgewählt ist, die aus einer Membran, einem Absperrventil, einem Rückschlagventil oder einem Schwimmerventil besteht.

9. Verfahren nach Anspruch 1, wobei die Fluidsteuereinheit ferner einen Fluidfilter umfasst.

**Revendications**

1. Procédé de fonctionnement d'une batterie à flux redox, la batterie à flux redox comprenant :

un ou plusieurs modules de batterie comportant chacun une cellule de batterie, des réservoirs d'électrolyte, un trajet d'électrolyte, un séparateur, une plaque de séparation, une électrode, une plaque collectrice et au moins une unité de régulation de fluide configurée pour transmettre au trajet d'électrolyte une pression générée extérieurement, dans lequel chaque module de batterie ou un nombre prédéterminé de modules de batterie est configuré pour faire circuler indépendamment un électrolyte afin de réaliser des opérations de charge/décharge, le procédé satisfaisant les équations 1 et 2 suivantes :

$$[\text{Equation 1}]\ Vh \geq 0{,}05\ Vc,$$

et

$$[\text{Equation 2}]\ 0{,}05(sec) \leq T \leq Vh/Qmin,$$

dans lequel, dans les équations 1 et 2, Vh est un volume maximal de l'électrolyte introduit dans l'unité de régulation de fluide, Qmin est un débit critique auquel un volume d'électrolyte circulant par minute correspond à 3 % d'un volume de réaction Vc, et T est un cycle de fonctionnement de l'unité de régulation de fluide, dans lequel le volume de réaction désigne un produit d'une aire du plus petit composant parmi le séparateur, la plaque de séparation, l'électrode et une plaque collectrice qui sont les composants de la cellule de batterie dans les trajets avec lesquels l'électrolyte est en contact direct, et d'une longueur du trajet qui est la plus courte en distance de face parmi les trajets de l'électrolyte.

2. Procédé selon la revendication 1, dans lequel chaque module de batterie comprend :

une ou plusieurs cellules de batterie comportant chacune une électrode positive et une électrode négative, ainsi qu'une plaque de séparation empilée sur une surface extérieure d'un séparateur ; une paire de réservoirs d'électrolyte fournis dans le module de batterie pour fournir un électrolyte d'électrode positive ou un électrolyte d'électrode négative à l'électrode positive ou à l'électrode négative, respectivement ; un trajet d'électrolyte reliant la cellule de batterie et chacun des réservoirs d'électrolyte pour transférer l'électrolyte ; et l'au moins une unité de régulation de fluide fournie dans le trajet d'électrolyte et configurée pour transmettre au trajet d'électrolyte la pression générée extérieurement depuis l'extérieur du module de batterie, régulant ainsi un flux de l'électrolyte.

3. Procédé selon la revendication 1, dans lequel chacune de l'au moins une unité de régulation de fluide comprend :

au moins un clapet anti-retour fourni dans le trajet d'électrolyte pour induire l'écoulement de l'électrolyte dans une direction ; et un tuyau de transfert de fluide fourni adjacent au clapet anti-retour pour communiquer avec le trajet d'électrolyte et configuré pour transmettre directement au trajet d'électrolyte la pression générée extérieurement depuis l'extérieur du module de batterie respectif.

4. Procédé selon la revendication 1, dans lequel chacune de l'au moins une unité de régulation de fluide comprend :

un boîtier d'unité de régulation fourni à une extrémité du trajet d'électrolyte, et situé dans un des réservoirs d'électrolyte ; un tuyau de transfert de fluide configuré pour transmettre directement au boîtier d'unité de régulation la pression

EP 3 719 902 B1

générée extérieurement depuis l'extérieur du module de batterie respectif ; et
au moins un clapet anti-retour fourni sur un côté du boîtier d'unité de régulation et configuré pour induire l'électrolyte depuis chacun des réservoirs d'électrolyte vers le boîtier d'unité de régulation et induire simultanément l'électrolyte depuis le boîtier d'unité de régulation vers le trajet d'électrolyte.

5. Procédé selon la revendication 1, dans lequel chaque module de batterie comprend deux ou plusieurs unités de régulation de fluide.

6. Procédé selon la revendication 1, dans lequel chaque module de batterie comprend deux unités de régulation de fluide, et un cycle d'alimentation en pression de chacune des deux unités de régulation de fluide est configuré de telle sorte que les sections d'un cycle de pression positive ou d'un cycle de pression négative de l'une quelconque des unités de régulation de fluide se chevauchent avec celles de l'autre unité de régulation de fluide.

7. Procédé selon la revendication 1, dans lequel chacune de l'au moins une unité de régulation de fluide comprend en outre au moins une vanne de régulation de pression.

8. Procédé selon la revendication 1, dans lequel l'unité de régulation de fluide comprend dans celle-ci au moins un composant empêchant l'entrée d'électrolyte sélectionné dans le groupe constitué par un diaphragme, une vanne d'arrêt, un clapet anti-retour, ou une vanne à flotteur.

9. Procédé selon la revendication 1, dans lequel l'unité de régulation de fluide comprend en outre un filtre à fluide.

# FIG. 1

# FIG. 2

# FIG. 3

FIG. 4

## FIG. 5A

## FIG. 5B

FIG. 5C

# FIG. 6

300 {
  300a
  300b
}

# FIG. 7

$$300 \begin{cases} 300a \\ 300b \end{cases}$$

# FIG. 8A

FIRST FLUID CONTROL UNIT

SECOND FLUID CONTROL UNIT

# FIG. 8B

FIRST FLUID CONTROL UNIT

SECOND FLUID CONTROL UNIT

# FIG. 8C

FIRST FLUID CONTROL UNIT

SECOND FLUID CONTROL UNIT

# FIG. 9A

# FIG. 9B

# FIG. 10A

# FIG. 10B

# FIG. 11

# FIG. 12

# FIG. 13

# FIG. 14A

# FIG. 14B

FIG. 14C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014220463 A1
- US 2016111706 A1
- US 2016372763 A1
- US 2014057141 A1
- US 2016315337 A1